# EUROPÄISCHE PATENTSCHRIFT

(11) **EP 0 446 689 B1**
(45) Veröffentlichungstag und Bekanntmachung des Hinweises auf die Patenterteilung: **06.12.1995**
(21) Anmeldenummer: 91102640.9
(22) Anmeldetag: 22.02.1991
(51) Int. Cl.: C09C 1/00, C03C 1/04, C03C 8/14

(54) **Glasurstabile Farbpigmente**
Coloured pigments which are stable in glaze
Pigments colorés stables dans de la glaçure

(30) Priorität: 07.03.1990 DE 4007037
(43) Veröffentlichungstag der Anmeldung: 18.09.1991
(73) Patentinhaber: MERCK PATENT GmbH, D-64271 Darmstadt (DE)
(72) Erfinder: Hechler, Wolfgang, W-6147 Lautertal-Reichenbach (DE); Osterried, Karl, Dr., W-6110 Dieburg (DE); Weigand, Manfred, Dr., W-6108 Weiterstadt (DE)

(56) Entgegenhaltungen:
- EP-A- 0 077 959
- EP-A- 0 082 984
- EP-A- 0 282 329
- FR-A- 2 072 300

## Beschreibung

Die Erfindung betrifft glasurstabile Farbpigmente auf der Basis von mit Metalloxiden beschichteten plättchenförmigen Substraten, die in Dekorfarben, Engoben, Glasuren und Emails stabil sind.

Es sind zahlreiche Pigmente bekannt, die in Glasuren, Emails oder vergleichbaren Materialien eingearbeitet werden. Sie sind jedoch mit einer Reihe von Nachteilen behaftet. So sind viele von ihnen bei den üblichen Einbrennbedingungen von etwa 700°-800 °C nicht temperaturstabil, da sie von den aggressiven Schmelzflüssen stark angegriffen werden. Andere wiederum enthalten einen hohen Anteil von umweltbelastenden Schwermetallen, z.B. Cadmium, um eine stabile Färbung, z.B. im gelben und roten Farbbereich zu gewährleisten.

Es bestand demnach ein Bedürfnis nach Pigmenten, die die erwähnten Nachteile nicht oder nur noch in geringem Maße besitzen.

Aus der US-Patentschrift 4,435,220 sind mit Metalloxid beschichtete, plättchenförmige Pigmente bekannt, die in der Außenbeschichtung Erdalkalimetalloxid oder-hydroxid enthalten.

Überraschenderweise wurde gefunden, daß man glasurstabile Farbpigmente erhält, wenn man plättchenförmige Substrate derart beschichtet, daß die Beschichtung erdalkalimetall- und siliziumoxidfrei ist, ein farbiges Metalloxid oder Metallhydroxid und mindestens 10 Gew.% Aluminiumoxid enthält und daß das Verhältnis farbiges Metalloxid oder Metallhydroxid zu Aluminiumoxid 10 bis 0,5 zu 1 beträgt.

Im Vergleich zu den erfindungsgemäßen Pigmenten zeigt sich, daß die nach US-Patentschrift 4,435,220 hergestellten Pigmente beispielsweise beim Einarbeiten von Fritten weit weniger farb- und hitzebeständig sind. Während sich die Farben bereits teilweise bei etwa 850°C verändern, bleiben die erfindungsgemäßen Pigmente mindestens bis 1000°C farbstabil.

In der EP 0082984 werden Perlglanzpigmente auf Basis von mit Titandioxid beschichteten Glimmerschuppen beschrieben, wobei die äußere Metalloxidschicht eine homogene Mischschicht aus Titandioxid, Siliziumdioxid und Eisenoxid ist. Die dort beschriebenen Titandioxidglimmerpigmente sind aufgrund ihres hohen Titandioxidgehalts für die Verwendung in Glasuren nicht geeignet, da sie nicht hitzebeständig sind.

Gegenstand der Erfindung sind daher Farbpigmente mit einer verbesserten Stabilität in Dekorfarben, Engoben, Glasuren und Emails auf der Basis von mit Metalloxid beschichteten plättchenförmigen Substraten, dadurch gekennzeichnet, daß die Außenbeschichtung erdalkalimetalloxidfrei ist, aus mindestens einem farbigen Metalloxid oder Metallhydroxid, Aluminiumoxid und gegebenenfalls Titan- oder Zinkoxid besteht, wobei der Anteil an Aluminiumoxid mindestens 10 Gew% beträgt und das Verhältnis farbiges Metalloxid oder Metallhydroxid Zu Aluminiumhydroxid 10 bis 0,5 zu 1 beträgt.

Gegenstand der Erfindung ist weiterhin ein Verfahren zur Herstellung der erfindungsgemäßen Pigmente, wobei man eine wäßrige Suspension eines plättchenförmigen Substrates mit einer Lösung eines Aluminiumsalzes und mindestens eines Salzes eines Metalls, dessen Oxid gefärbt ist und gegebenenfalls eines Titan- oder Zinksalzes und einer Base vermischt, das auf diese Weise mit Hydroxiden bzw. Oxidhydraten beschichtete Substrat abtrennt, gegebenenfalls wäscht und trocknet, und dann kalziniert.

Gegenstand der Erfindung ist auch die Verwendung der erfindungsgemäßen Pigmente zur Pigmentierung von Glasuren und Emails.

Gegenstand der Erfindung sind schließlich mit Glasuren oder Emails überzogene Materialien, die die erfindungsgemäßen Pigmente enthalten.

Als plättchenförmige Substrate können im Prinzip beliebige plättchenförmige Materialien wie Glimmer, Talk, Kaolin, Glas- oder Metallplättchen oder plättchenförmige Metalloxide, sowie bereits mit Metallhydroxiden oder -oxiden, insbesondere Titandioxid, beschichtete Glimmerschuppen eingesetzt werden. Werden Glimmerschuppen als Substrate eingesetzt, so beträgt der Teilchengrößenbereich etwa 1-100 »m, vorzugsweise 5-50 »m. Insbesondere bevorzugt sind Glimmerschuppen < 15 »m. Von den Metallplättchen sind diejenigen geeignet, die bei den hohen Anwendungstemperaturen noch nicht schmelzen.

Die Teilchengröße anderer plättchenförmiger Substrate liegt in der Regel im gleichen, wie für die Glimmerschuppen angegebenen Bereich. Sollen jedoch spezielle Effekte erzielt werden, so können die durchschnittlichen Teilchengrößen auch außerhalb der genannten Bereiche liegen.

Die Substrate werden in wäßriger Suspension mit einer Lösung eines Aluminium- und mindestens eines weiteren Metallsalzes vermischt. Von den Metallsalzen sind Eisen-, Kobalt- und Chromsalze wie FeSO₄, FeCl₂, Fe(NH₄)₂(SO₄)₂, Fe(NO₃)₂, Fe₂(SO₄)₃, FeCl₃, FeNH₄(SO₄)₂, Fe(NO₃)₃, CoCl₃, CoSO₄, Co(NO₃)₂, CrCl₃, Cr₂(SO₄)₃ und CrNH₄(SO₄)₂ bevorzugt. Von den Aluminiumsalzen sind beispielsweise Al₂(SO₄)₃, AlNH₄(SO₄)₂, AlCl₃, Al(NO₃)₃, AlNa(SO₄)₂ und AlK(SO₄)₂ geeignet. Falls erforderlich können noch geeignete Salzlösungen anderer Metalle wie bespielsweise von Zink oder Titan zugesetzt werden. Das Verhältnis der Metallsalze miteinander ist in weiten Grenzen variierbar. Die Metallsalze sind dabei auch in Form ihrer Hydrate einsetzbar. Der Aluminiumsalzanteil ist auf jeden Fall so zu wählen, daß die erfindungsgemäße Beschichtung des fertiggestellten Pigments mindestens 10 Gew.% Aluminiumoxid enthält.

Die Metallsalzhydrolyse wird nach an sich bekannten Verfahren, wie z.B. in der DE 35 35 818 oder der in der EP 0 077 959 beschrieben, durchgeführt.

In der Regel wird eine 5-25 Gew.%ige Suspension des plättchenförmigen Substrats in der Lösung der Metallsalze, die etwa 0,2 bis 1,2 mmol Metallsalze pro qm zu beschichtender Substratoberfläche enthält, hergestellt. Durch gleichzeitiges Zudosieren einer Base wird der pH-Wert weitgehend konstant gehalten. Ein zur Hydrolyse geeigneter pH-Wert liegt in der Regel bei etwa 1-7. Als Basen sind z.B. Alkalilaugen wie Natronlauge oder Kalilauge oder auch wäßriger Ammoniak, sowie andere, beispielsweise in der EP 0 077 959 beschriebene Basen geeignet. Die Base wird als etwa 5 bis 35%ige Lösung zugegeben. Die Salze werden dabei hydrolysiert und die Metalle in Form ihrer Hydroxide oder Oxidhydrate abgeschieden. Die so beschichteten Substrate werden anschließend abgetrennt, bei etwa 120 °C getrocknet und bei etwa 400° bis 950 °C kalziniert.

Von den erfindungsgemäßen Pigmenten sind diejenigen bevorzugt, die in der Beschichtung neben Aluminiumoxid im wesentlichen ein oder zwei weitere Metalloxide enthalten. Der Aluminiumoxidgehalt in der Beschichtung beträgt vorzugsweise 10 bis 70 Gew.%, insbesondere 15 bis 35 Gew.%.

Ganz besonders bevorzugt sind Beschichtungen mit einem hohen Eisenoxidanteil neben Aluminiumoxid im Verhältnis von etwa 10 bis 0,5 : 1, insbesondere von etwa 3,5 bis 2,5 : 1.

Um die gewünschte Stabilisierung zu erreichen, sind substantielle Mengen dieser Oxide aufzubringen. Es hat sich als zweckmäßig erwiesen, die erfindungsgemäße Beschichtung in Mengen von etwa 5 bis 75 Gew.%, bezogen auf das Gesamtpigment, aufzubringen.

Die erfindungsgemäßen Pigmente können im Prinzip für alle bekannten Anwendungen eingesetzt werden, aufgrund der verbesserten Stabilität finden sie jedoch vorzugsweise Anwendung bei der Pigmentierung von keramischen Materialien und in silikatischen Flüssen.

### Beispiel 1

100 g Glimmer mit einer Teilchengröße < 15 »m werden in 2 l vollentsalztem (VE)-Wasser suspendiert. Durch Zugabe von verdünnter Salzsäure wird ein pH-Wert von 5,5 eingestellt. 152,1 g FeCl₃ x 6 H₂O und 93,8 g Al₂(SO₄)₃ x 18 H₂O werden in VE-Wasser gelöst. Die Lösung wird auf ein Volumen von 1,5 l aufgefüllt. Anschließend wird die Fe/Al-Salzlösung zur Glimmersuspension gegeben, wobei durch Zugabe einer 10%igen Natronlauge der pH-Wert bei 5,5 gehalten sind. Es werden verschiedene Proben abgenommen, und zwar nach Zugabe folgender Mengen an Salzlösung:
a) 600 ml
b) 675 ml
c) 750 ml
d) 850 ml
e) 1000 ml
f) 1200 ml
Die Proben werden abfiltriert, mit VE-Wasser salzfrei gewaschen und 15 h bei 120 °C getrocknet. Abschließend wird 30 min bei 900 °C geglüht. Man erhält schwach orange (a) bis orange-rote (e, f) Farbpigmente.

### Beispiel 2

Es wird analog Beispiel 1 gearbeitet, jedoch mit verändertem Fe/Al-Verhältnis. Es werden eingesetzt: 111,5 g FeCl₃ x 6 H₂O und 23,9 g Al₂(SO₄)₃ x 18 H₂O.

### Beispiel 3

Es wird analog Beispiel 1 gearbeitet, jedoch mit verändertem Fe/Al-Verhältnis. Es werden eingesetzt: 111,5 g FeCl₃ x 6 H₂O und 215,4 g Al₂(SO₄)₃ x 18 H₂O.

### Beispiel 4

Es wird analog Beispiel 1 gearbeitet, jedoch mit verändertem Fe/Al-Verhältnis. Die Salzlösung wird zusätzlich mit einer wäßrigen TiCl₄-Lösung (400 g/l) vermischt. Eingesetzte Mengen:
45,7 g FeCl₃ x 6 H₂O, 58,8 g Al₂(SO₄)₃ x 18 H₂O, 80,1 ml TiCl₄-Lösung.

### Beispiel 5

1 g eines nach Beispiel 1 hergestellten Pigments wird mit 4 g einer gemahlenen, im Handel erhältlichen Dekorfarbenfritte und 6 g des Siebdruckmediums Degussa 80840 (Fa. Degussa) vermischt und in einer Fliehkraftkugelmühle nochmals vermahlen. Diese Mischung wird im Siebdruckverfahren auf einen Scherben aufgetragen (61 T Siebgewebe). Anschließend wird bei 850 °C 5 min lang gebrannt. Man erhält eine glänzende Dekorschicht mit rot-oranger Farbe.

Analog werden weitere Scherben bedruckt und bei 950° und bei 1000 °C gebrannt. Die Färbung bleibt dabei weitgehend unverändert.

### Beispiel 6

Es wird analog Beispiel 5 verfahren und jeweils auch bei 850°, 950° und 1000 °C gebrannt, allerdings wird ein 120 T Siebgewebe verwendet. Man erhält glänzende, farbstabile Dekorschichten mit oranger Farbe.

## Patentansprüche

1. Farbpigmente mit einer verbesserten Stabilität in Dekorfarben, Engoben, Glasuren und Emails auf der Basis von mit Metalloxiden beschichteten plättchenförmigen Substraten, dadurch gekennzeichnet, daß die Außenbeschichtung erdalkalimetalloxidfrei ist, aus mindestens einem farbigen Metalloxid oder Metallhydroxid, Aluminiumoxid und gegebenenfalls Titan- oder Zinkoxid besteht, wobei der Anteil an Aluminiumoxid mindestens 10 Gew.% beträgt und das Verhältnis farbiges Metalloxid oder Metallhydroxid zu Aluminiumhydroxid 10 bis 0,5 zu 1 beträgt.

2. Pigmente nach Anspruch 1, dadurch gekennzeichnet, daß die Beschichtung im wesentlichen aus Eisenoxid und Aluminiumoxid besteht.

3. Pigmente nach Anspruch 1 oder 2, dadurch gekennzeichnet, daß als Substrat Glimmerschuppen eingesetzt werden.

4. Verfahren zur Herstellung von Pigmenten nach mindestens einem der Ansprüche 1 bis 3, dadurch gekennzeichnet, daß man eine wäßrige Suspension eines plättchenförmigen Substrats mit einer Lösung eines Aluminiumsalzes und mindestens eines Salzes eines Metalls, dessen Oxid gefärbt ist, und gegebenenfalls eines Titan- oder Zinksalzes und einer Base vermischt, das auf diese Weise mit Hydroxiden bzw. Oxidhydraten beschichtete Substrat abtrennt, gegebenenfalls wäscht und trocknet, und dann kalziniert.

5. Verwendung von Pigmenten nach mindestens einem der Ansprüche 1 bis 3 zur Pigmentierung von Glasuren und Emails.

6. Mit Glasuren oder Emails überzogene Materialien, dadurch gekennzeichnet, daß sie Pigmente nach mindestens einem der Ansprüche 1 bis 3 enthalten.

## Claims

1. Colour pigments having an improved stability in decorative colours, engobes, glazes and enamels, based on platelet-type substrates coated with metal oxides, characterized in that the outer coating is free from alkaline earth metal oxides and consists of at least one coloured metal oxide or metal hydroxide, aluminium oxide and optionally titanium or zinc oxide, the proportion of aluminium oxide being at least 10% by weight and the ratio of coloured metal oxide or metal hydroxide to aluminium hydroxide being 10 to 0.5 : 1.

2. Pigments according to Claim 1, characterized in that the coating consists essentially of iron oxide and aluminium oxide.

3. Pigments according to Claims 1 or 2, characterized in that mica flakes are used as substrate.

4. Process for the production of pigments according to at least one of Claims 1 to 3, characterized in that an aqueous suspension of a platelet-type substrate is mixed with a solution of an aluminium salt and at least one salt of a metal whose oxide is coloured, and optionally of a titanium or zinc salt and a base, the substrate coated in this manner with hydroxides or hydrated oxides is separated, if appropriate, washed, dried and then calcined.

5. Use of pigments according to at least one of Claims 1 to 3 for pigmenting glazes and enamels.

6. Materials coated with glazes or enamels, characterized in that they contain pigments according to at least one of the Claims 1 to 3.

## Revendications

1. Pigments de coloration ayant une meilleure stabilité dans les peintures de décoration, les engobes, les vernis et les émaux à base de substrats en paillettes enduits d'une fine couche d'oxydes métalliques caractérisés en ce que la couche extérieure ne contient aucun oxyde de métaux alcalino-terreux, se compose d'au moins un hydroxyde métallique ou oxyde métallique coloré, d'oxyde d'aluminium et le cas échéant d'oxyde de titane ou d'oxyde de zinc, la proportion d'oxyde d'aluminium représentant au moins 10 % en poids et le rapport d'hydroxyde métallique ou d'oxyde métallique coloré par rapport à l'hydroxyde d'aluminium est de 10 à 0,5 pour 1.

2. Pigments selon la revendication 1, caractérisés en ce que la couche se compose essentiellement d'oxyde de feret d'oxyde d'aluminium.

3. Pigments selon la revendication 1 ou 2, caractérisés en ce qu'ils sont employés comme substrat aux paillettes de mica.

4. Procédé pour la fabrication de pigments selon au moins l'une des revendications 1 à 3, caractérisé en ce qu'on mélange une suspension aqueuse d'un substrat en paillettes avec une solution d'un sel d'aluminium et d'au moins un sel d'un métal, dont l'oxyde est coloré, et le cas échéant d'un sel de titane ou de zinc et une base, qui de cette façon sépare le substrat enduit d'une fine couche d'hydroxydes ou d'hydrates d'oxyde, le cas échéant on lave et sèche, et ensuite on cuit.

5. Utilisation de pigments selon au moins une des revendications 1 à 3, pour la pigmentation de vernis et d'émaux.

6. Matériaux recouverts de vernis ou d'émaux, caractérisés en ce qu'ils contiennent des pigments selon au moins l'une des revendications 1 à 3.
